# EUROPEAN PATENT APPLICATION

(11) **EP 3 782 750 A1**
(43) Date of publication of application: **24.02.2021**
(21) Application number: 19192880.3
(22) Date of filing: 21.08.2019
(51) Int. Cl.: B23B 51/02

(54) **TOOL HEAD, CUTTING TOOL AND METHOD OF FIXING A TOOL HEAD TO AN ADAPTER**

(71) Applicant: VARGUS Ltd., 22311 Nahariya (IL)
(72) Inventor: Morgulis, Rafael, 2194012 Karmiel (IL)
(74) Representative: Patentanwälte Ruff, Wilhelm, Beier, Dauster & Partner mbB

(57) **Abstract**

Tool head (10) of a cutting tool (100) for use with an adapter (50) having a central pin (38), comprising a receiving hole (22) extending along a longitudinal axis (11) of the tool head (10) and being adapted to receive the central pin (38) of the adapter (50) when the tool head (10) is fixed to the adapter (50). At an inner surface of the receiving hole (22) at least one radially protruding contact area (18, 19) for contacting the central pin (38) is provided.

## Description

### TECHNICAL FIELD AND PRIOR ART

The invention relates to a tool head, a cutting tool and a method of fixing a tool head to an adapter.

Tool heads are commonly used for material processing, in particular for milling or for drilling operations. The tool head is for example a shell mill cutter. As different machine tool interfaces are available, it is known to mount the tool head to a machine using a so-called adapter, which adapter is selected according to the machine tool interface.

Commonly used adapters are provided at a front face, i.e. a face opposite to the machine tool interface, with a central pin having a circular cross-section and with a drive component, which is typically in the form of two drive keys extending at either side of the central pin diagonally across the front face. The corresponding tool head is provided with a central receiving hole cooperating with the central pin to locate the tool head concentric to the adapter and with two grooves or keyways for positive engagement with the drive keys of the adapter.

### SUMMARY OF THE INVENTION

It is the object of the invention to provide a tool head, a cutting tool and a method of fixing a tool head to an adapter which provide a higher accuracy of radial run-out.

This object is solved by a tool head and a cutting tool with the features of claims 1 and 13 and a method of fixing a tool head to an adapter with the features of claim 14. Preferred embodiments are defined in the dependent claims.

According to a first aspect, a tool head of a cutting tool for use with an adapter having a central pin with a circular cross-section is provided. The tool head comprises a receiving hole extending along a longitudinal axis of the tool head and being adapted to receive the central pin of the adapter when the tool head is fixed to the adapter. At an inner surface of the receiving hole at least one radially protruding contact area for contacting the central pin is provided.

The tool head is intended for material processing, in particular for milling or for drilling operations, using a machine, wherein the tool head is fixed to the machine using the adapter.

The tool head is suitable for use with commonly used adapters, also referred to as standard adapters for material processing. The adapter can be selected by the person skilled in the art according to a type of spindle nose of the machine. The adapter in embodiments is compatible with a machine interface systems known for example as BT, CAT or CAPTO adaptation systems.

The tool head in one embodiment is a shell mill cuter comprising a body having a number of recesses for mounting cutting inserts, for example five, six or eight recesses. In other embodiments, the tool head is provided with cutting blades or other cutting tool tips

The central pin of the adapter is arranged concentrically to a longitudinal axis of the adapter and is used to locate the tool head concentric to the adapter and thus to a spindle of the machine.

The receiving hole is complementary in form to the central pin and has an essentially circular cross-section. In order to improve a radial run-out accuracy, the receiving hole is provided with at least one radially protruding contact area, wherein a surface shell area of the central pin abuts the at least one radially protruding contact area, when the tool head is fixed to the adapter. The at least one radially protruding contact area in one embodiment extends over the entire depth of the receiving hole. In embodiments, the at least one radially protruding contact extends azimuthally over 30%, 20%, 10% or 5% of the circumference of the receiving hole.

The higher accuracy of radial run-out results in longer service life of the tool head, in particular cutting blades or cutting inserts provided at the tool head, and in a higher surface quality of the processed material.

In the context of the invention, a surface of the tool head facing towards the adapter in use is referred to as proximal end surface. The opposite surface is referred to as distal end surface. In use, the proximal end surface of the tool head in preferred embodiments abuts a front face of the adapter.

In one embodiment the tool head comprises at least one drive element provided at a proximal end surface of the tool head. The drive element is adapted for positive engagement with a drive component of the adapter when the tool head is fixed to the adapter. One of the at least one drive element and the drive component is a drive key and the other one is a complementary keyway. In one embodiment, the tool head comprises two radially extending aligned keyways, which are arranged at either side of the receiving hole and the adapter comprises two complementary drive keys arranged at either side of the central pin. The drive element and the drive component are adapted for a torque transmission from the adapter to the tool head.

In one embodiment at the inner surface of the receiving hole exactly two radially protruding contact areas spaced apart in circumferential direction for contacting the central pin are provided. The two radially protruding contact areas might be azimuthally spaced apart with an angular range between approximately 60° to approximately 160°.

In one embodiment the two radially protruding contact areas are arranged and/or designed such that the two radially protruding contact areas are symmetrical to a symmetry plane, wherein the symmetry plane is perpendicular to a longitudinal axis of the drive element and passes through a longitudinal axis of the tool head.

In one embodiment the tool head comprises a pin screw and a thread hole for the pin screw, which thread hole reaches to the receiving hole, wherein the thread hole extends crosswise to the longitudinal axis of the tool head and wherein the pin screw is adapted to contact the central pin and to push the central pin against the at least one radially protruding contact area, when the central pin is received in the receiving hole and the pin screw is tightened. The pin screw in one embodiment is a setscrew. The thread hole in embodiments extends obliquely to the longitudinal axis of the tool head. In other embodiments, the thread hole lies in a plane perpendicular to the longitudinal axis of the tool head and extends perpendicular to the longitudinal axis of the tool head.

In one embodiment, the thread hole extends in a non-radial direction with respect to the receiving hole, such that the pin screw contacts the central pin received in the receiving hole with its circumferential surface, wherein the pin screw is adapted to push the tool head against the adapter, when the central pin is received in the receiving hole and when the pin screw contacting the central pin is tightened. Due to rotational movement of the pin screw upon tightening the pin screw and due to friction forces between the pin screw and the central pin received in the receiving hole, the tool head can be pushed in a direction along the longitudinal axis of the tool head against the adapter. As an advantage, an axial run-out of the tool head is reduced.

In one embodiment the pin screw comprises a chamfer being adapted to contact the central pin, when the tool head is fixed to the adapter. The pin screw in embodiments of the invention comprises a pointed end in form of a cone or a round end in form of a half sphere, wherein a shell surface of the pointed end or the round end form the chamfer. In embodiments of the invention, the inclination of the chamfer and a longitudinal axis of the thread hole with respect to a symmetry plane of the tool head are adapted to each other such that the chamfer is tangential to the surface shell area of the receiving hole to allow that the pin screw tangentially contacts the central pin.

In one embodiment the pin screw is adapted to contact the central pin in a contact region, when the tool head is fixed to the adapter, wherein the contact region lies in the symmetry plane. In case only one contact area is provided, the contact region in one embodiment is arranged opposite to said radially protruding contact area.

In one embodiment the thread hole extends in a non-radial direction with respect to the receiving hole, wherein in a plane perpendicular to the longitudinal axis of the tool head, an angle between a longitudinal axis of the thread hole and a longitudinal axis of the drive element is in the range of about 30° to about 60°. In embodiments of the invention, the inclination of the chamfer and a longitudinal axis of the thread hole with respect to a symmetry plane of the tool head are adapted to each other, wherein in one embodiment, the angle between the longitudinal axis of the thread hole and the longitudinal axis of the drive element is half of the apex angle of the cone of the pin screw, when the pin screw comprises a pointed end in form of a cone. As mentioned above, upon rotation of the pin screw, the tool head can be moved towards a front face of the adapter.

In one embodiment the tool head comprises a through hole being adapted to receive a fastening screw for fixing the tool head to the adapter. The through hole in one embodiment is a counter sunk drill hole. The adapter in embodiments comprise a fastening thread for the fastening screw, wherein the tool head is fixed to the adapter when the fastening screw is received by the through hole and screwed to the fastening thread.

In one embodiment a longitudinal axis of the through hole is the longitudinal axis of the tool head, in particular the tool head is adapted to rotate around the longitudinal axis of the through hole, when material processing is performed with the tool head.

In one embodiment the tool head is a shell milling cutter head.

According to a second aspect, a cutting tool comprising a tool head as described above and the adapter is provided, wherein the tool head is fixable to the adapter.

According to a third aspect, a method of fixing a tool head as described above to the adapter is provided. The method comprises the steps: receiving the central pin in the receiving hole, contacting the central pin to the at least one radially protruding contact area, and fixing the tool head to the adapter. The steps receiving and contacting can be performed simultaneously or successively. The step fixing in one embodiment is performed after the steps receiving and contacting. The step fixing in one embodiment is accomplished using a fastening screw, wherein the tool head comprises a through hole being adapted to receive the fastening screw and the adapter comprises a fastening thread for the fastening screw, wherein the fastening screw is tightened when the fastening screw is received by the through hole and screwed to the fastening thread.

In one embodiment of the method the tool head comprises a pin screw and a thread hole for the pin screw, wherein the thread hole extends crosswise to a longitudinal axis of the tool head. The method comprises the steps: tightening the pin screw. The step contacting the central pin to the at least one radially protruding contact area is carried out by pushing the central pin against the at least one radially protruding contact area with the pin screw, in particular when the pin screw is tightened.

In the following, an embodiment of the invention is described in detail with reference to the drawings. Throughout the drawings, the same elements will be denoted by the same reference numerals. The figures show:
- Fig. 1: an exploded view of a cutting tool comprising a tool head according to the invention fixed to an adapter,
- Fig. 2: a side view of the cutting tool of Fig. 1,
- Fig. 3: a sectional view of the cutting tool of Fig. 2 along an intersecting line II-II,
- Fig. 4: a top view of the tool head of Fig. 1, and
- Fig. 5: a perspective view of the cutting tool of Fig. 1.

### DETAILED DESCRIPTION OF EMBODIMENTS OF THE INVENTION

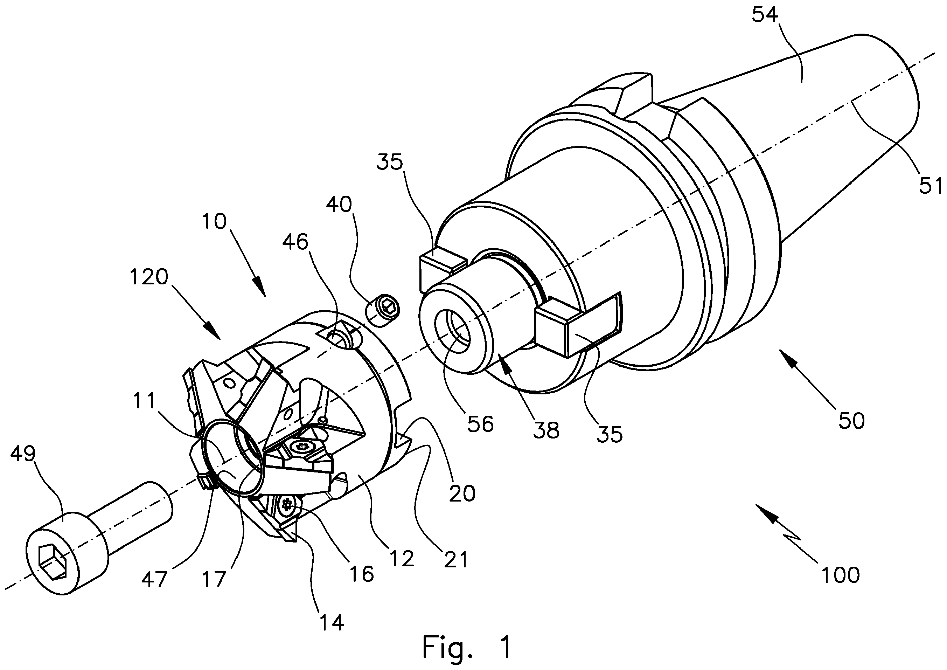

Figure 1 shows in an exploded view a cutting tool 100 comprising a tool head 10 that can be fixed to an adapter 50. The cutting tool 100 can be mounted to a machine (not shown).

The tool head 10 shown in the figures is a shell milling cutter head having a body 12 with five recesses 120 to which cutting inserts 14 can be mounted. Each cutting insert 14 is mounted in one of the recesses 120 using a cutting insert mounting screw 16. During material processing the material will be removed with the cutting inserts 14. Thus, the cutting inserts 14 are for example made from carbide material or other harder materials than the material to be processed.

A rear part of the adapter 50 is adapted to a machine tool interface of the machine (not shown). In the embodiment shown, the rear part of the adapter 50 comprises a cone 54, however, other interfaces are known to the person skilled in the art.

At a front face, the adapter 50 is provided with a central pin 38 having a circular cross-section and extending along a longitudinal axis 51 of the adapter 50 and two drive components 35, wherein in the embodiment shown, the drive components are two aligned drive keys, which are arranged at two opposing sides of the central pin 38 and extend radially with respect the central pin 38.

Upon a material processing, the tool head 10 is fixed to the adapter, and driven to rotate about its longitudinal axis 11, wherein both longitudinal axis 11, 51 are to be aligned with high accuracy.

The tool head 10 has a receiving hole 22 (not visible in Fig. 1), which extends along its longitudinal axis 11, when fixing the tool head 10 to the adapter 50, the central pin 38 is received in the receiving hole 22 to locate the tool head concentric to the adapter 50.

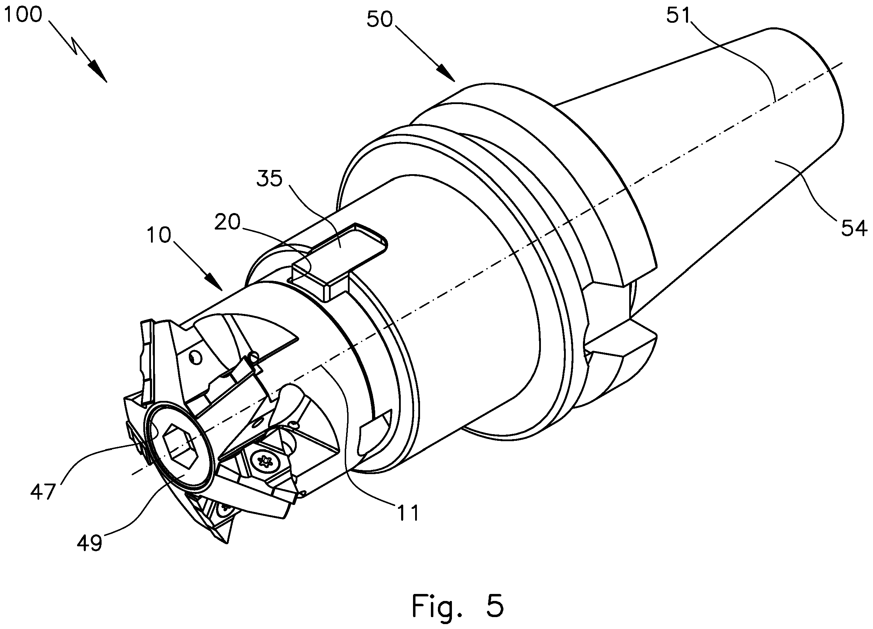

Further, the tool head 10 shown in the figures comprises two drive elements 20 in form of keyways provided at a proximal end surface 21 of the tool head 10. The drive elements 20 are complementary to the drive components 35 of the adapter 50 for allowing a torque transmission to the tool head 10. The drive component 35 comprises two parts, best seen in figure 5 showing an exploded view of the cutting tool of figure 1. The drive component 35 is mounted with a press fit to the adapter 50. In an alternative not shown embodiment the drive component 35 is mounted with screws.

The tool head 10 is clamped to the adapter 50 using a fastening screw 49. For this purpose, the tool head 10 comprises a through hole 47 adapted to receive the fastening screw 49. In the embodiment shown, the through hole 47 is embodied as a counter sunk drill hole along the longitudinal axis 11 of the tool head 10.

The fastening screw 49 is embodied as cylinder head screw corresponding to the through hole 47. The adapter 50 comprises a fastening thread 56 for the fastening screw 49. In the embodiment shown, the fastening thread 56 is provided in the central pin 38. The tool head 10 is fixed to the adapter 50 when the fastening screw 49 is received by the through hole 47 and screwed to the fastening thread 56, wherein a head of the fastening screw 49 abuts against a stopper wall 17 limiting the receiving hole 22 towards the distal end.

The tool head 1 is further provided with a thread hole 46 for receiving a pin screw 40 as will be described in more detail below.

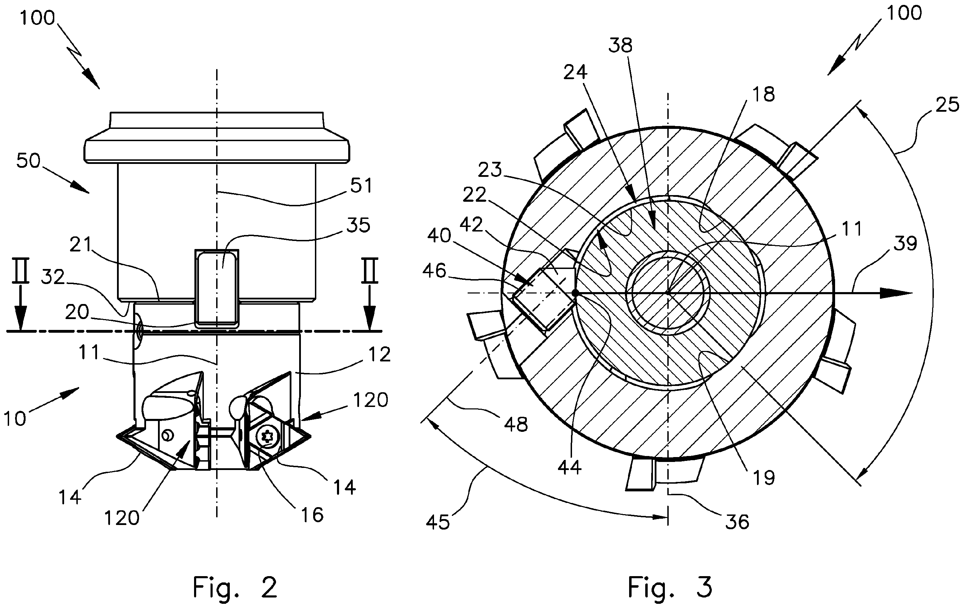

Figures 2 to 5 show different views of the cutting tool 100 of Fig. 1, wherein the tool head 10 is fixed to the adapter 50 and the proximal end surface 21 of the tool head 10 abuts against a front surface 32 of the adapter 50. In the fixed condition of Figs. 2 to 5, the drive elements 20 receive the drive components 35 in such a way, that a torque generated by a machine (not shown) to which the adapter 50 is mounted is transmitted from the adapter 50 to the tool head 10 via the drive elements 20 and the drive components 35.

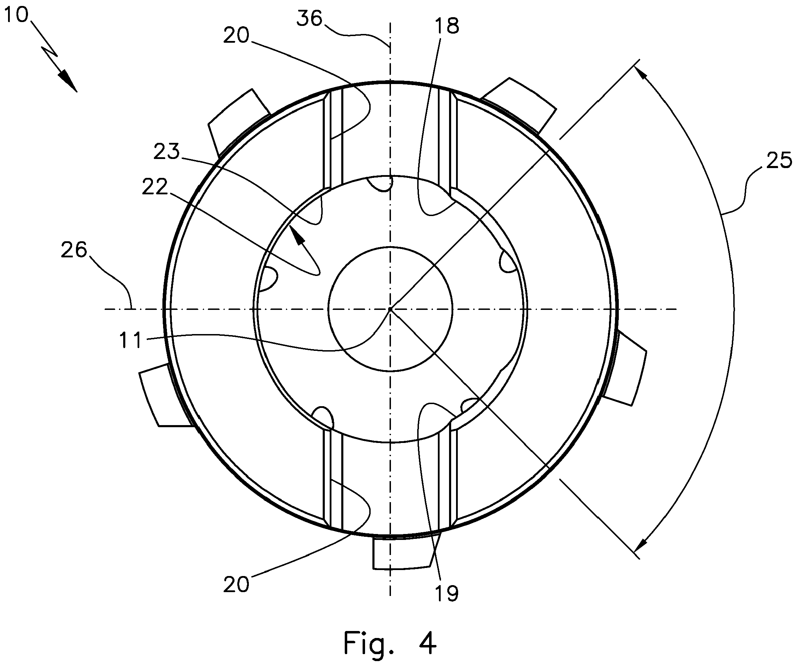

Figure 2 shows a side view of the cutting tool 100. Figure 3 shows a sectional view of the cutting tool 100 of figure 2 along an intersecting line II-II, figure 4 shows a top view of the tool head 10 of figure 2 and figure 5 shows a perspective view.

As described above, the tool head 10 is provided with the receiving hole 22 extending along the longitudinal axis 11 of the tool head 10 and having an essentially circular cross-section. The receiving hole 22 is adapted to receive the central pin 38 of the adapter 50, as best seen in figure 3. The central pin 38 has a circular cross-section. In order to allow for an insertion, the receiving hole 22 has a larger diameter than the central pin 38, resulting in a radial gap 24 between the receiving hole 22 and the central pin 38 when the central pin 38 is received by the receiving hole 22.

In the embodiment shown, at an inner surface 23 of the receiving hole 22 two radially protruding contact areas 18, 19 for contacting the central pin 38 are provided for enhancing a radial run-out accuracy.

The two radially protruding contact areas 18, 19 protrude from an inner surface 23 of the receiving hole 22 and are spaced apart in circumferential direction. Each of the radially protruding contact areas 18, 19 comprises a center of area, wherein the centers of area are spaced from each other with an angle 25, which in the embodiment shown is approximately 90°. In other embodiments, this angle 25 is chosen differently.

Further, in the embodiment shown, the two radially protruding contact areas 18, 19 are arranged such that the two radially protruding contact areas 18, 19 are symmetrical to a symmetry plane 26, best seen in figure 4. The symmetry plane 26 is a plane being perpendicular to a longitudinal axis 36 of the drive elements 20 and passing through the longitudinal axis 11 of the tool head 10. The longitudinal axis 36 of the drive elements 20 is in the embodiment shown a symmetry axis of the drive elements 20.

In order to align the longitudinal axis 11 of the tool head 10 with the longitudinal axis 51 of the adapter 50, the tool head 10 further comprises the pin screw 40 for pushing the central pin 38 in a direction 39 against the two radially protruding contact areas 18, 19, as best seen in figure 3. The direction 39 is within the symmetry plane 26. In other words, the direction 39 is perpendicular to the longitudinal axis 36 of the drive element 20.

The pin screw 40 in the embodiment shown is a set screw having a pointed end in form of a cone with an apex angle, which in the embodiment shown is approximately 90°. The pin screw 40 comprises a chamfer 42, wherein the chamfer 42 is the shell surface of the cone. The chamfer 42 contacts the central pin 38 at a contact region 44 in a tangential manner. The contact region 44 lies in the symmetry plane 26, when the central pin 38 contacts the two radially protruding contact areas 18, 19.

The pin screw 40 is received from a thread hole 46 of the tool head 10. The thread hole 46 extends crosswise to the longitudinal axis 11 of the tool head 10. An angle 45 between a longitudinal axis 48 of the thread hole 46 and the longitudinal axis 36 of the drive element 20 is adapted to the chamfer 42 of the pin screw 40, in particular the angle 45 is the half of the apex angle of the cone of the pin screw 40. In the embodiment shown the angle 45 is approximately 45°. In other embodiments, this angle 45 and the chamfer 42 are chosen differently.

When the pin screw 40 is tightened, the central pin 38 is pushed against the two radially protruding contact areas 18, 19 until the central pin 38 contacts the two radially protruding contact areas 18, 19. In other words, until a radial gap between the central pin 38 and the two radially protruding contact areas 18, 19 is annihilated. As a result, the tool head 10 is aligned with the adapter 50 leading to a higher accuracy of radial run-out of the tool head 10.

In addition, due to friction at the contact region 44 between the pin screw 40 and the central pin 38 the pin screw 40 pushes the tool head 10 against the adapter 50, when the pin screw 40 contacts the central pin 38 and is tightened. In detail, the proximal end surface 21 of the tool head 10 is pushed against the distal surface 32 of the adapter 50 caused by a rotational movement of the pin screw 40 executed during tightening. As a result, the tool head 10 is positioned in a direction along the longitudinal axis 11 of the tool head 10 leading to a higher accuracy of axial run-out of the tool head 10.

A method of fixing the tool head 10 to the adapter 50 can best be explained with reference to figure 1. In a first step, the tool head 10 is put on the adapter 50, such that the central pin 38 is received by the receiving hole 22 and the drive components 35 in form of the two drive keys are received by the drive elements 20 in form of the keyways. In a second step, the pin screw 40 is inserted in the thread hole 46 and tightened. During tightening, the pin screw 40 pushes the central pin 38 against the two radially protruding contact areas 18, 19, such that the central pin 38 contacts the two radially protruding contact areas 18, 19. In addition, the pin screw 40 pushes the tool head 10 against the adapter 50, such that the proximal end surface 21 of the tool head 10 contacts the distal surface 32 of the adapter 50. In a third step, the tool head 10 is fixed to the adapter 50 by inserting the fastening screw 49 in the through hole 47 and in the fastening thread 56 and by tightening the fastening screw 49.

The embodiments shown in the figures and explained above make clear, that the invention provides a tool head, a cutting tool and a method of fixing a tool head which provide a higher accuracy of radial run out.

## Claims

1. Tool head of a cutting tool (100) for use with an adapter (50) having a central pin (38) with a circular cross-section, the tool head (10) comprising:
a receiving hole (22) extending along a longitudinal axis (11) of the tool head (10) and being adapted to receive the central pin (38) of the adapter (50) when the tool head (10) is fixed to the adapter (50),
**characterized in that**
at an inner surface (23) of the receiving hole (22) at least one radially protruding contact area (18, 19) for contacting the central pin (38) is provided.

2. Tool head according to claim 1, comprising
at least one drive element (20) provided at a proximal end surface (21) of the tool head (10) and being adapted for positive engagement with a drive component (35) of the adapter (50) when the tool head (10) is fixed to the adapter (50), wherein one of the drive element (20) and the drive component (35) is a drive key and the other one is a complementary keyway.

3. Tool head according to claim 1 or 2, **characterized in that**
at the inner surface (23) of the receiving hole (22) exactly two radially protruding contact areas (18, 19) spaced apart in circumferential direction for contacting the central pin (38) are provided.

4. Tool head according to claim 3, **characterized in that**
the two radially protruding contact areas (18, 19) are arranged and/or designed such that the two radially protruding contact areas (18, 19) are symmetrical to a symmetry plane (26), wherein the symmetry plane (26) is perpendicular to a longitudinal axis (36) of the drive element (20) and passes through a longitudinal axis (11) of the tool head (10).

5. Tool head according to anyone of the preceding claims, comprising
- a pin screw (40) and
- a thread hole (46) for the pin screw (40), which reaches to the receiving hole (22),
- wherein the thread hole (46) extends crosswise to the longitudinal axis (11) of the tool head (10) and
- wherein the pin screw (40) is adapted to contact the central pin (38) and to push the central pin (38) against the at least one radially protruding contact area (18, 19), when the central pin (38) is received in the receiving hole (22) and the pin screw (40) is tightened.

6. Tool head according to claim 5, **characterized in that**
the thread hole (46) extends in a non-radial direction with respect to the receiving hole (22), such that the pin screw (40) contacts the central pin (38) received in the receiving hole (22) with its circumferential surface, wherein the pin screw (40) is adapted to push the tool head (10) against the adapter (50), when the central pin (38) is received in the receiving hole (22) and when the pin screw (40) contacting the central pin (38) is tightened.

7. Tool head according to claim 5 or 6, **characterized in that**
the pin screw (40) comprises a chamfer (42) being adapted to contact the central pin (38), when the tool head (10) is fixed to the adapter (50).

8. Tool head according to one of the claims 5 to 7, **characterized in that**
the pin screw (40) is adapted to contact the central pin (38) in a contact region (44), when the tool head (10) is fixed to the adapter (50), wherein the contact region (44) lies in the symmetry plane (26).

9. Tool head according to one of the claims 5 to 8, **characterized in that**
the thread hole (46) extends in a non-radial direction with respect to the receiving hole (22), wherein in a plane perpendicular to the longitudinal axis (11) of the tool head (10), an angle between a longitudinal axis (48) of the thread hole (46) and a longitudinal axis (36) of the drive element (20) is in the range of 30° to 60°.

10. Tool head according to anyone of the preceding claims, comprising
a through hole (47) being adapted to receive a fastening screw (49) for fixing the tool head (10) to the adapter (50).

11. Tool head according to claim 10, **characterized in that**
a longitudinal axis of the through hole (47) is the longitudinal axis (11) of the tool head (10), in particular the tool head (10) is adapted to rotate around the longitudinal axis of the through hole (47), when material processing is performed with the tool head (10).

12. Tool head according to anyone of the preceding claims, **characterized in that**
the tool head (10) is a shell milling cutter head.

13. Cutting tool, comprising:
- a tool head (10) according to anyone of the preceding claims, and
- the adapter (50),
- wherein the tool head (10) can be fixed to the adapter (50).

14. Method of fixing a tool head (10) according to anyone of the preceding claims to the adapter (50), the method comprising the steps:
- receiving the central pin (38) in the receiving hole (22),
- contacting the central pin (38) to the at least one radially protruding contact area (18, 19), and
- fixing the tool head (10) to the adapter (50).

15. Method according to claim 14, wherein the tool head (10) comprises a pin screw (40) and a thread hole (46) for the pin screw (40), wherein the thread hole (46) extends crosswise to a longitudinal axis (11) of the tool head (10), comprising the steps:
- tightening the pin screw (40),
- wherein the step contacting the central pin (38) to the at least one radially protruding contact area (18, 19) is carried out by pushing the central pin (38) against the at least one radially protruding contact area (18, 19) with the pin screw (40).
